# EUROPEAN PATENT APPLICATION

(11) **EP 0 625 698 A2**
(43) Date of publication of application: **23.11.1994**
(21) Application number: 94107616.8
(22) Date of filing: 16.05.1994
(51) Int. Cl.: G01H 11/02

(54) **Vibration/impact detecting sensor**

(30) Priority: 17.05.1993 JP 139339/93
(71) Applicant: N.D.R. Co. Ltd., Otokuni-gun, Kyoto (JP)
(72) Inventor: Nakamura, Tsutomu, Otokuni-gun, Kyoto (JP)
(74) Representative: Hering, Hartmut, Dipl.-Ing.

(57) **Abstract**

A sensor for generating a signal for vibration/impact detection or measurement is provided which has fewer components parts and is simple in construction and durable, which is less expensive. A moving magnet (2) is housed in a moving magnet guide member (3) held in a fixed state relative to fixed magnets (1) so that the moving magnet (2) is positioned between the fixed magnets (1) in such a manner that respective poles of same polarity of the fixed and moving magnets (1, 2) are positioned in face to face relation. Means (4₁ to 4₈) for detecting displacement of the moving magnet (2), such as Hall element (4₂) is disposed at a position opposite to a side of the moving magnet guide member (3) which is held in flotation at a magnetically balanced position under a magnetic repulsion force due to homopolarity, so that a signal for vibration/impact detection or measurement may be obtained on the basis of a signal from the detecting means (4₁ to 4₈).

## Description

The present invention relates to a sensor for producing a signal for vibration/impact detection and/or measurement.

Hitherto, there have been known sensors for detecting or measuring vibration and/or impact of the type having a specific type of weight and a spring which are typically such that the stress of the spring is utilized in obtaining a signal for detecting and/or measuring the magnitude of the vibration and/or impact in terms of changes in the elasticity of the spring. For example, pedometers are known including one such that a spring-biased rocking magnet is used to detect a change in the magnetic field, and another such that a spindle suspended from an arm end is used to provide a signal indicative of contact making and breaking due to spindle rocking. Sensors which provide such a signal upon detection of acceleration have also been used in some areas of application.

Sensors of the former type structurally require springs, and this necessitates, in addition to springs, many other component parts, such as weight and hinge mechanism. In effect, therefore, it is difficult to achieve good quality stability and cost reduction and there is a limitation in respect of service durability. Sensors of the type which detects acceleration for vibration sensing or measurement have a disadvantage that they involve high costs.

The present invention has been developed in view of these facts and, accordingly, it is an object of the invention to provide a sensor which is structurally simple and durable and inexpensive to manufacture.

In order to accomplish the above object, according to one technical aspect of the present invention there is provided a sensor for detecting or measuring vibration and/or impact, comprising, at least, a fixed magnet having magnetic poles oriented in vertical directions, a moving magnet disposed above the fixed magnet and in face-to-face relation with the upper side magnetic pole of the fixed magnet on its homopolarity side so that it is positioned in flotation with a predetermined distance kept from the fixed magnet under a repulsion force due to homopolarity, a moving magnet guide member for guiding the moving magnet perpendicularly movably relative to the fixed magnet, the guide member being in a fixed condition with respect to the fixed magnet, and a moving magnet displacement sensing means attached to the guide member for detecting the displacement of the moving magnet.

According to another technical aspect of the present invention directed to accomplishing the foregoing object, there is provided a sensor for detecting or measuring vibration and/or impact, comprising a pair of fixed magnets disposed at a predetermined distance from each other so that their magnetic poles are positioned in a straight line, one or more moving magnets disposed between opposed magnetic poles of the fixed magnets and in face to face relation thereto on respective homopolarity sides so that the or each moving magnet is positioned at a magnetically balanced position under a repulsion force due to homopolarity, a moving magnet guide member for guiding the or each moving magnet for movement between the fixed magnets, the guide member being in a fixed condition with respect to the fixed magnets, and moving magnet displacement sensing means attached to the guide member for detecting the displacement of the or each moving magnet.

For the moving magnet displacement sensing means, it is advantageous to provide a reed switch on a side of the moving magnet guide member at a position opposite to the or each moving magnet for detecting the displacement of the or each moving magnet.

For the moving magnet displacement sensing means, a galvanomagnetic device in the form of a Hall element or a cored coil may be provided on a side of the moving magnet guide member at a position opposite to the or each moving magnet for detecting the displacement of the or each moving magnet.

Where the moving magnet is disposed above the fixed magnet whose poles are vertically oriented, and in flotation under the effect of repulsion force due to homopolarity, for the moving magnet displacement sensing means, it is desirable to attach a cored coil to the moving magnet guide member at a predetermined position opposite to the fixed magnet across the moving magnet and in face to face relation to the upper side pole of the moving magnet.

Optical elements may be used for the moving magnet displacement sensing means. More specifically, it is possible to provide a light emitter element and a light receptor element externally of the moving magnet guide member so that they are positioned across the line of movement of the moving magnet so as to enable a light path between the light emitter and light receptor elements to be positioned adjacent a pole side end of the moving magnet in crossing relation to that line of movement. Where the moving magnet is disposed above the fixed magnet whose poles are vertically oriented and in flotation under the effect of repulsion force due to homopolarity, it is possible to attach a light emitter element and a light receptor element to the moving magnet guide member at a predetermined position opposite to the fixed magnet across the moving magnet so that they face the upper side magnetic pole of the moving magnet to enable a light path to be defined between the light emitter and light receptor elements such that light will be reflected from the top surface of the moving magnet to become incident on the light receptor element.

It is also possible to use mere coils for the moving magnet displacement sensing means. In this case, a coil may be provided which is wound around the moving magnet guide member over the area of movement of the moving magnet so as to detect the displacement of the moving magnet.

Further, it is possible to use mere contacts for the moving magnet displacement sensing means. In this case, a traveling contact may be attached to a pole face of the moving magnet opposite to the fixed magnet, and a fixed contact to the moving magnet guide member in face to face relation to the traveling contact, so that the contact are turned on when the moving magnet is displaced, though this is applicable only where the moving magnet is disposed above the fixed magnet whose poles are vertically oriented and in flotation under the effect of repulsion force due to homopolarity.

The moving magnet, being disposed above the fixed magnet whose poles are vertically oriented, with one of its holes positioned in face to face relation to the upper side pole of same polarity of the fixed magnet, is guided by the moving magnet guide member for being held in flotation with a predetermined distance kept from the fixed magnet under a repulsion force due to homopolarity. Therefore, when the body of the sensor is subjected to vertically oriented vibration and/or impact, the moving magnet tends to keep its original position because of the inertia of the moving magnet per se. Whilst, the fixed magnet, the moving magnet guide member held in fixed relation to the fixed magnet, and the moving magnet displacement sensing means attached to the guide member will then become displaced relative to the moving magnet, whereupon the moving magnet displacement sensing means will detect this displacement. Thus, by virtue of the sensing means it is possible to obtain a signal for detection or measurement of such vibration and/or impact.

In another aspect, between opposed poles of a pair of fixed magnets disposed at a predetermined distance from each other so that their magnetic poles are positioned in a straight line, whether vertical or horizontal, are disposed one or more moving magnets disposed in face to face relation to the fixed magnets on respective homopolarity sides so that the or each moving magnet is positioned at a magnetically balanced position under a repulsion force due to homopolarity. Therefore, when the body of the sensor is subjected to vertically oriented vibration and/or impact, the or each moving magnet tends to keep its original position because of the inertia of the moving magnet per se. Whilst, the fixed magnets, the moving magnet guide member held in fixed relation to the fixed magnet, and the moving magnet displacement sensing means attached to the guide member will then become displaced relative to the moving magnet, whereupon the moving magnet displacement sensing means will detect this displacement. Thus, by virtue of the sensing means it is possible to obtain signals for detection or measurement of vibrations and/or impacts in all directions.

Where, for the moving magnet displacement sensing means, a reed switch is used which is disposed on a side of the moving magnet guide member and in opposed relation to the moving magnet, tongue-like contacts formed of magnetic material of the reed switch which are enclosed in a small-diameter glass tube will intermittently detect displacement of the moving magnet in response to the displacement of the moving magnet. Thus, by virtue of the moving magnet displacement sensing means it is possible to obtain a digital signal for detection or measurement of vibration and/or impact.

Where, for the moving magnet displacement sensing means, a Hall element, or a galvanomagnetic element, is used which is disposed on a side of the moving magnet guide member and in opposed relation to the moving magnet, the element, when current is caused to flow therein, will detect a change in the magnetic field due to displacement of the moving magnet, and a change in the voltage due to any decrease or decrease in the resistance across three output leads. Thus, it is possible to obtain an analog signal for vibration/impact detection or measurement.

Where, for the moving magnet displacement sensing means, a cored coil is used which is disposed on a side of the moving magnet guide member and in opposed relation to the moving magnet, the cored coil will detect a change in the magnetic field due to displacement of the moving magnet. Thus, through a change in the current flowing in the coil, it is possible to obtain an analog signal for vibration/impact detection or measurement. The same is true in the case where the cored coil is attached to the moving magnet guide member at a predetermined position above and opposite to the fixed magnet whose poles are vertically oriented across the moving magnet, and in face to face relation to the upper side magnetic pole of the moving magnet. It is to be noted in this case the axis of the iron core may be either horizontal or vertical.

Where, for the moving magnet displacement sensing means, a light emitter element and a light receptor element are externally attached to the moving magnet guide member so that they are positioned across the line of movement of the moving magnet so as to enable a light path between the light emitter and light receptor elements to be positioned adjacent a pole side end of the moving magnet in crossing relation to that line of movement (in which case that portion of the guide member which corresponds to the light path), it is possible to obtain digital signals and/or small-range analog signals for vibration/impact measurement during on/off operations for the light path.

Where, for the moving magnet displacement sensing means, a light emitter element and a light receptor element are attached to the moving magnet guide member above the fixed magnet whose poles are vertically oriented, at a predetermined position opposite to the fixed magnet across the moving magnet so that they face the upper side magnetic pole of the moving magnet to enable a light path to be defined between the light emitter and light receptor elements such that light will be reflected from the top surface of the moving magnet to become incident on the light receptor element, the length of the light path fluctuates due to vertical displacement of the moving magnet, whereby analogue signals for vibration/impact measurement can be obtained.

Where the moving magnet displacement sensing means is a coil wound around the moving magnet guide member over the area of movement of the moving magnet, a change in magnetically induced electromotive force due to displacement of the moving magnet enables provision of an analog signal for vibration/impact detection or measurement.

Where the moving magnet displacement sensing means comprise a traveling contact attached, at a position above the fixed magnet whose poles are vertically oriented, to a pole face (upper face) of the moving magnet opposite to the fixed magnet, and a fixed contact attached from above to the moving magnet guide member in face to face relation to the traveling contact, the two contacts turn on and off as the moving magnet is displaced, to provide a signal for vibration/impact detection or measurement.

According to the arrangement of the vibration/impact detecting sensor as claimed in claim 1, a moving magnet 2 is disposed above a fixed magnet 1 whose magnetic poles oriented in vertical directions, the moving magnet being held in flotation in a moving magnet guide member under a repulsion force due to homopolarity, so that displacement of the moving magnet due to any vibration/impact to which the sensor is subject may be detected by a moving magnet displacement sensing means attached to the moving magnet guide member. Therefore, it is possible to provide a sensor which has fewer component parts, has no part subject to wear, is simple in construction and stable in quality, and which is durable and inexpensive. In particular, the sensor can be advantageously used at less cost for purposes of detecting and measuring vertical vibrations and impacts.

According to the arrangement of the vibration/impact detecting sensor as claimed in claim 2, one or more moving magnets are disposed between a pair of fixed magnets so that they are held in a moving magnet guide member at a magnetically balanced position under repulsion force of the magnets, whereby any displacement of the or each moving magnet due to vibrations/impacts to which the sensor is subject can be detected by a moving magnet displacement sensing means attached to the moving magnet guide member. Therefore, as is the case with the above described arrangement, it is possible to provide a sensor which has fewer component parts, has no part subject to wear, is simple in construction and stable in quality, and which is durable and inexpensive. Further, the fact that the moving magnet or magnets are held at a magnetically balanced position permits the sensor to be selectively mounted in all directions, whether vertical or horizontal, according to the purpose for which the sensor is used. This assures a wider range of applications.

According to the arrangement as claimed in claim 3, the moving magnet displacement sensing means of the vibration/impact detecting sensor comprise a reed switch. This enables easy generation of a digital signal for vibration/impact detection or measurement.

According to the arrangement as claimed in claim 4, a galvanomagnetic element is used for the moving magnet displacement sensing means. This enables easy generation of analog signals for vibration/impact detection or measurement.

According to the arrangement as claimed in claim 5, a cored coil attached to a side of the moving magnet guide member is used as the moving magnet displacement sensing means. This enables easy generation of analog signals for vibration/impact detection or measurement.

According to the arrangement as claimed in claim 6, the moving magnet displacement sensing means comprise a cored coil which is attached to the moving magnet guide member in face to face relation to the upper side magnetic pole of the moving magnet positioned above the fixed magnet. This enables easy generation of analog signals for vibration/impact detection or measurement, and further provides for size reduction with respect to the body portion of the sensor, though this is applicable only where magnetic poles of the sensor are vertically oriented.

According to the arrangement as claimed in claim 7, the moving magnet displacement sensing means comprise a light emitter element and a light receptor element which are attached to the moving magnet guide member across the line of movement of the moving magnet. This enables easy generation of digital signals and a small range of analog signals for vibration/impact detection or measurement. Where digital signal generation is required, the use of such an optical elements of semiconductor provides an advantage over the use of a reed switch because it results in production of a failure-free high-durability sensor.

According to the arrangement as claimed in claim 8, the moving magnet displacement sensing means comprise a light emitter element and a light receptor element which are attached to the moving magnet guide member in face to face relation to the upper side magnetic pole of the moving magnet so as to enable a light path to be defined between the light emitter and light receptor elements so that light is reflected from the top surface of the moving magnet to become incident upon the light receptor element. This enables easy generation of analog signals for vibration/impact detection or measurement. Further, this arrangement provides for size reduction with respect to the body portion of the sensor, though magnet pole orientation is limited to vertical directions.

According to the arrangement as claimed in claim 9, the moving magnet displacement sensing means comprise a coil wound around the moving magnet guide member over the area of movement of the moving magnet. This involves less cost and enables easy generation of analog signals for vibration/impact detection or measurement.

According to the arrangement as claimed in claim 10, the moving magnet displacement sensing means comprise a traveling contact attached to the top surface of the moving magnet above the fixed magnet whose magnetic poles are vertically oriented, and a fixed contact attached to the moving magnet guide member in face to face relation to the traveling contact. This involves less cost and enables easy generation of digital signals for vibration/impact detection or measurement. Further, this provides for size reduction with respect to the body portion of the sensor, though magnet pole orientation is limited to vertical directions.

### BRIEF DESCRIPTION OF THE DRAWINGS

These and other objects and features of the present invention will become apparent from the following description taken in conjunction with the preferred embodiment thereof with reference to the accompanying drawings, in which:
Fig. 1 is a principled view of a vibration/impact detecting sensor in which poles of built-in magnets of the sensor are vertically oriented and moving magnet displacement sensing means of the sensor is a reed switch;
Fig. 2 is a principled view of a vibration/impact detecting sensor in which poles of built-in magnets of the sensor are vertically oriented and moving magnet displacement sensing means of the sensor is a galvanomagnetic device;
Fig. 3 is a principled view of a vibration/impact detecting sensor in which poles of built-in magnets of the sensor are vertically oriented and moving magnet displacement sensing means of the sensor is a cored coil located on a side of a moving magnet;
Fig. 4 is a principled view of a vibration/impact detecting sensor in which poles of built-in magnets of the sensor are vertically oriented and moving magnet displacement sensing means of the sensor is a cored coil located above the moving magnet;
Fig. 5 is a principled view of a vibration/impact detecting sensor in which poles of built-in magnets of the sensor are vertically oriented and moving magnet displacement sensing means of the sensor comprise a light emitter element and a light receptor element which are positioned across the line of movement of the moving magnet;
Fig. 6 is a principled view of a vibration/impact detecting sensor in which poles of built-in magnets of the sensor are vertically oriented and moving magnet displacement sensing means of the sensor comprise a light emitter element and a light receptor element which are positioned above the moving magnet;
Fig. 7 is a principled view of a vibration/impact detecting sensor in which poles of built-in magnets of the sensor are vertically oriented and moving magnet displacement sensing means of the sensor is a coil wound around a moving magnet guide member;
Fig. 8 is a principled view of a vibration/impact detecting sensor in which poles of built-in magnets of the sensor are vertically oriented and moving magnet displacement sensing means of the sensor comprise a traveling contact attached to the top surface of the moving magnet and a fixed contact attached to the moving magnet guide member in face to face relation to the moving magnet guide member;
Fig. 9 is a principled view of a vibration/impact detecting sensor in which poles of built-in magnets of the sensor are aligned in a straight line and may be oriented in all directions and moving magnet displacement sensing means of the sensor comprise a galvanomagnetic device corresponding to a plurality of moving magnets, the sensor being capable of providing plural signals;
Fig. 10 is a principled view of a vibration/impact detecting sensor in which poles of built-in magnets of the sensor are aligned in a straight line and may be oriented in all directions and moving magnet displacement sensing means of the sensor comprise a galvanomagnetic device corresponding to a single moving magnet; and
Fig. 11 is a circuit diagram applicable when a vibration/impact detecting sensor of the invention is in use which is coupled to a measuring apparatus.

Embodiments of the vibration/impact sensors according to the present invention will now be described with reference to the accompanying drawings. It is to be understood that the invention is not limited by the embodiments.

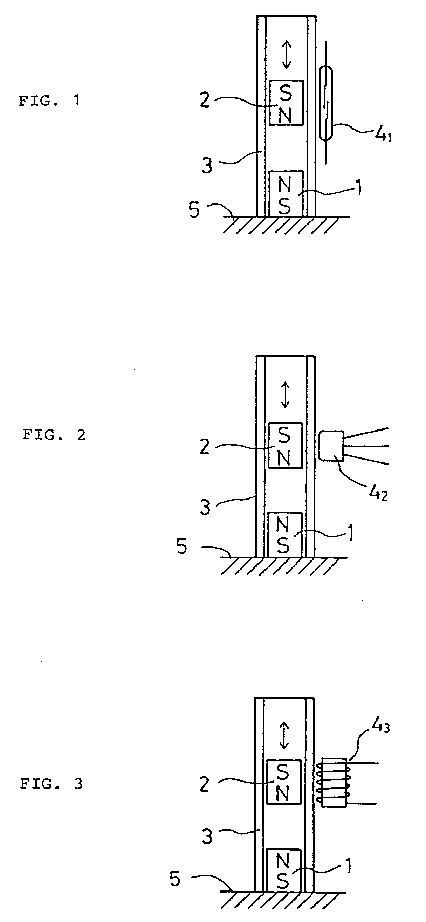

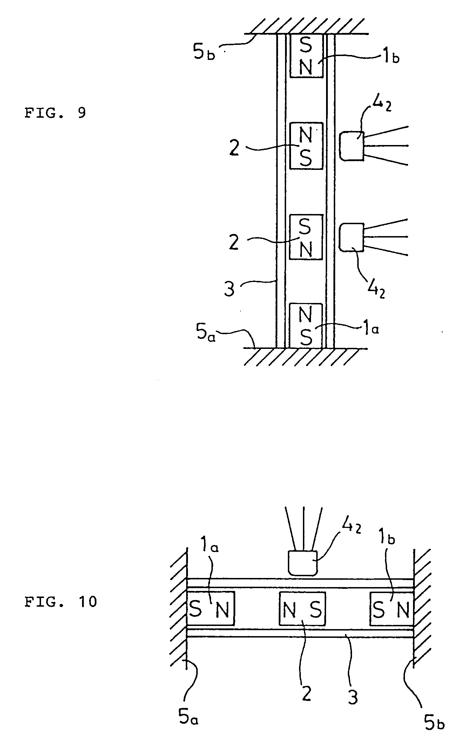

Figs. 1 through 8 show embodiments of the invention in which the vibration/impact detecting sensor is vertically or almost vertically mounted. Figs. 9 through 11 show embodiments in which the sensor may be mounted in any direction.

In sensors shown in Figs. 1 through 8, a fixed magnet 1 is securely fixed on a mounting base 5 having a horizontal or substantially horizontal surface. In the embodiments shown, the top side is taken as N pole and the bottom side is taken as S pole. Whichever pole may be set upside, however. The mounting base 5 is a flat plate made to a predetermined size for use in sensor mounting at any desired location. For mounting the sensor to a machine or the like set in place, a horizontal portion of the machine or the like is used as a mounting base 5.

A plastic-made moving magnet guide member 3 having a predetermined thickness and a predetermined height is fixedly mounted in a vertical or almost vertical direction on the mounting base 5 in such a way as to surround the fixed magnet 1 so that the guide member will guide a moving magnet 2 to be described hereinafter for movement relative to the fixed magnet 1 when the sensor is subjected to any vibration or impact. The material of the guide member 3 may be other non-magnetic material in place of plastics. Above the fixed magnet 1 there is disposed a moving magnet 2 of same size as the fixed magnet in such a manner that the moving magnet is positioned in opposed spaced relation to the upper side pole of the fixed magnet 1(N pole in this case) on the same polarity side as the latter, being held in flotation in the guide member 3 under a repulsion force of homopolarity. In this case, the distance between the fixed magnet 1 and the moving magnet 2 is determined by the magnitude of magnetic forces of the opposing N poles of the fixed magnet 1 and moving magnet 2, as well as the weight of the moving magnet 2. In this case, a moving magnet displacement sensing means to be described hereinafter is attached to a side or the top of the moving magnet guide member 3 at a position suitable for detecting any vertical displacement of the moving magnet 2, so that relative displacement of the moving magnet 2 and fixed magnet 1 may be detected by the moving magnet displacement sensing means when the base 5 attached to a subject for measurement or a base 5 formed in a part of the subject is exposed to any vibration or impact from the subject, whereby a signal for detecting or measuring the vibration or impact can be obtained.

Vibration/impact detecting sensors which respectively have different moving magnet displacement sensing means, wherein poles of the built-in magnets are vertically oriented, will now be explained with reference to Figs. 1 through 8.

In Fig. 1 there is shown a sensor in which the moving magnet displacement sensing means is a reed switch 4, attached to a side of the moving magnet guide member 3 in opposed relation to the moving magnet 2 and at a position suitable for detecting displacement of the moving magnet 2. This reed switch 4₁ includes a tongue-like contact of magnetic material enclosed in a small-diameter tube which, when the sensor is subjected to any vibration or impact, turns on and off in response to any displacement of the magnetic material 2 to provide a digital signal. According to this arrangement, a digital signal generating sensor which is structurally simple and durable can be obtained.

Fig. 2 shows a sensor in which the moving magnet displacement sensing means is a Hall element 4₂ or a galvanomagnetic device attached to a side of the moving magnet guide member 3 in opposed relation to the moving magnet 2 and at position suitable for detecting displacement of the moving magnet 2. This Hall element 4₂ is such that when the sensor is subjected to any vibration or impact, the position of magnetic field relative to the Hall element 4₂ changes in response to the displacement of the moving magnet 2 and there occurs a change in resistance between three output leads of the Hall element 4₂ such that an increase at one side results in a decrease at another. This change is converted into a change in voltage to provide an analog signal. According to this arrangement, it is possible to obtain an analog signal generating type sensor having good service durability.

In Fig. 3 there is shown a sensor in which the moving magnet displacement sensing means is a cored coil 4₃ attached to a side of the moving magnet guide member 3 in opposed relation to the moving magnet 2 and at a position suitable for detecting any displacement of the moving magnet 2. This cored coil 4₃ is such that when the sensor is subjected to any vibration or impact, the position of the magnetic field relative to the cored coil 4₃ changes and accordingly the electromotive force of the coil 4₃ under magnetic induction changes to provide an analog signal. According to this arrangement, it is possible to obtain an analog signal generating type sensor which is durable and inexpensive.

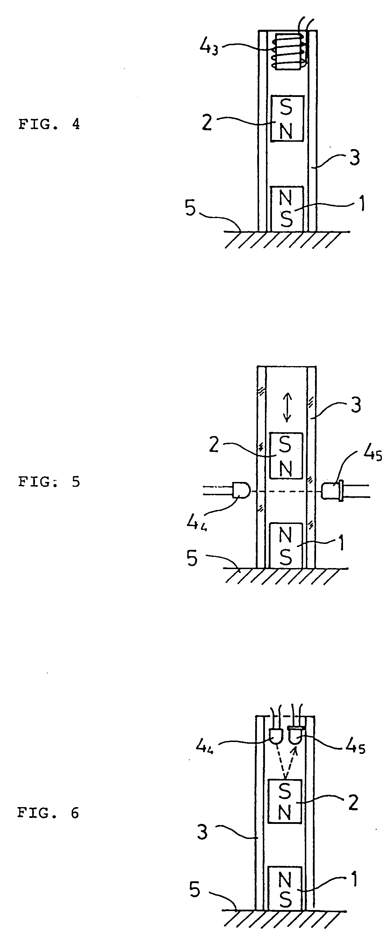

In Fig. 4 there is shown a sensor in which the moving magnet displacement sensing means is a cored coil 4₃ disposed inside the moving magnet guide member 3 at an upper site and in opposed relation to the upper side pole (S pole) of the moving magnet 2. In this case, the magnetic field profile of the moving magnet 2 relative to the coil 4₃ is different from that in Fig. 3, but as is the case with the Fig. 3 embodiment, it is possible to provide an analog signal through a change in the magnetically induced electromotive force from the coil 4₃ as a result of a change in the position of the magnetic field due to displacement of the moving magnet 2. According to this sensor arrangement, the outer dimensions of the sensor itself can be reduced.

In Fig. 5 there is shown a sensor in which the moving magnet displacement sensing means comprise a light emitter element or light-emitting diode (LED) 4₄ and a light receptor element or phototransistor (or photodiode) 4₅ which are disposed at sides of a moving magnet guide member 3 of transparent plastic across the line of movement of the moving magnet 2 so that the light path between the light emitter and light receptor elements is positioned adjacent the lower N pole of the moving magnet 2 in orthogonal relation to the line of movement. According to this arrangement, when the sensor is subjected to any vibration or impact and accordingly the moving magnet 2 is displaced so that the path of light is turned on and off, the current passing through the phototransistor 4₅ (collector current) (or current passing through the photodiode 4₅) flows in proportion to the quantity of light, so that digital signals or small-range analog signals may be obtained. Unlike sensors using a reed switch 4₁, the sensor of this embodiment as a digital signal generating type sensor has no glass used therein and therefore it is very durable.

Fig. 6 shows a sensor in which the moving magnet displacement sensing means comprise a light-emitting diode (LED) 4₄ and a photodiode (or phototransistor) 4₅ which are attached to inner top side of the moving magnet guide member 3 so as to face the upper side pole of the moving magnet 2 held in flotation so that the light path therebetween is reflected from the top surface of the moving magnet 2 to incident on the photodiode (or phototransistor) 4₅. According to this arrangement, the length of the light path changes due to vertical displacement of the moving magnet 2, which makes it possible to obtain analog signals according to changes in intensity of the current flowing through the receptor element or photodiode (or phototransistor) 4₅. A light emitter/receptor element, as a combined form of the two elements, may be used alone. In any case, this arrangement permits greater reduction in outer shape and size of the sensor itself as compared with the preceding embodiment.

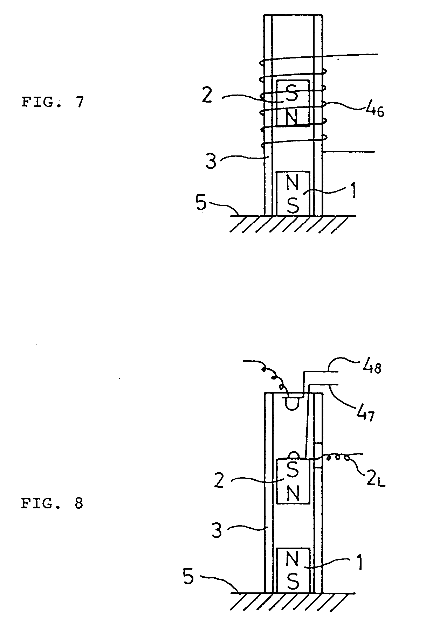

Fig. 7 shows a sensor in which the moving magnet displacement sensing means comprise a coil 4₆ wound around the moving magnet guide member 3 over the area of movement of the moving magnet 2. This arrangement makes it possible to obtain analog signals according to changes in the magnetically induced electromotive force due to displacement of the moving magnet 2, and has an advantage that the sensor itself is less expensive than any sensor using a cored coil.

Fig. 8 shows a sensor in which the moving magnet displacement sensing means comprise a traveling contact 4₇disposed at the pole (S pole) of the moving magnet 2 opposite from the fixed magnet 1, the traveling contact being held in connection with a flexible lead wire 2_{L} extending through the moving magnet guide member 3 side wall, and a fixed contact 4₈ attached to the moving magnet guide member 3 in opposed relation to the traveling contact and at a location thereabove. According to this arrangement, the two contacts 4₇, 4₈ turn on and off as the moving magnet 2 is displaced, it being thus possible to obtain digital signals. This sensor, as a digital signal producing type sensor, is inferior to the Fig. 1 sensor using a reed switch, but on the other hand it is less expensive.

In the foregoing embodiments, the moving magnet guide member is open-topped and has no cover, but of course it may be used with a cover placed thereon.

Sensors shown in Figs. 9 to 11, unlike the foregoing embodiments, have a pair of fixed magnets 1a, 1b arranged at a predetermined distance from each other so that their magnetic poles are aligned in a straight line. Between opposed poles of the fixed magnets 1a, 1b there is disposed one or two moving magnets, with their poles of same polarity positioned in opposed relation thereto, at a magnetically balanced position under a repulsion force of same polarity. A moving magnet guide member 3, adapted to guide the moving magnet or magnets 2 between the fixed magnets 1a, 1b, is provided in such a way as to surround the pair of fixed magnets 1a, 1b, its both ends being securely fixed, in conjunction with the fixed magnets 1a, 1b, to the surfaces of a pair of opposed mounting base 5a, 5b. A galvanomagnetic element or Hall element 4₂, as vibration/impact sensing means, is attached to a side of the moving magnet guide member 3 at a position corresponding to the one or two moving magnets held at a magnetically balanced position within the moving magnet guide member 3 and in opposed relation to each moving magnet 2. In these sensors, each moving magnet 2 is held at a magnetically balance position and, therefore, the sensors can be used in all directions, whether the moving magnet 2 is vertically mounted or horizontally mounted.

Vibration/impact detecting sensors in which there is no limitation as to the direction of mounting will now be explained with reference to Figs. 9 to 11.

In the sensor illustrated in Fig. 9, between a pair of mounting bases 5a, 5a arranged in vertically spaced parallel opposed relation there are disposed a pair of fixed magnets 1a, 1b having polar directions perpendicular to the surface of the bases 5a, 5b and securely fixed to the bases with their poles of same polarity (N poles) positioned in opposed relation. A moving magnet guide member 3 made of plastic and having a predetermined thickness is also securely fixed to the mounting bases 5a, 5b in such a manner as to surround the fixed magnets 1a, 1b, with two moving magnets 2, 2 housed therein. The two moving magnets 2, 2 are arranged in such a way that their inwardly opposed poles of same polarity are S poles and their respective outer poles or N poles are positioned face to face to respective inner poles of same polarity of the fixed magnets 1a, 1b, so that they are held in a magnetically balanced position under a repulsion force of same polarity poles. Hall elements 4₂ are arranged outside the moving magnet guide member 3 at positions opposite to a side of the moving magnets 2, 2 so as to detect displacement of the moving magnets 2. When the sensor is subjected to any vibration/impact, or the mounting base 5a and/or 5b as mounted to or formed in a measurement object is subjected to the same, the respective Hall elements 4₂ detect a change in the magnetic field due to relative displacement of the respective moving magnets 2 and respective Hall elements 4₂ and produce signals for vibration/impact detection or measurement. Fig. 9 illustrates a case in which two signals are obtained simultaneously from two moving magnets. Similarly, it is possible to obtain a plurality of analog signals simultaneously from three or more moving magnets.

In the sensor shown in Fig. 10, a pair of fixed magnets 1a, 1b whose poles are horizontally oriented are securely fixed to a pair of spaced parallel mounting bases 5a, 5b in such a way that their respective N poles and S poles are positioned in opposed relation on same polarity side. A plastic-made moving magnet guide member 3 having predetermined wall thickness, with a single moving magnet 2 housed therein, is securely fixed at both ends to the mounting bases 1a, 1b in such a way as to surround the fixed magnets 1a, 1b. The moving magnet 2 is disposed so that its opposite poles are respectively opposed to inner side poles of the fixed poles 1a, 1b on the same polarity side, that is, in N to N and S to S opposed relation, it being thus located at a central position where magnetic force is balanced under repulsion force of same polarity poles. A Hall element 4₂ is disposed outside the moving magnet guide member 3 at a position opposite to a side of the moving magnet 2. As is the case with the preceding embodiment, when the sensor is subjected to any vibration/impact, or the mounting base 5a and/or 5b as mounted to or formed in a measurement object is subjected to the same, the respective Hall elements 4₂ detect a change in the magnetic field due to relative displacement of the respective moving magnets 2 and respective Hall elements 4₂. and produce signals for vibration/impact detection or measurement.

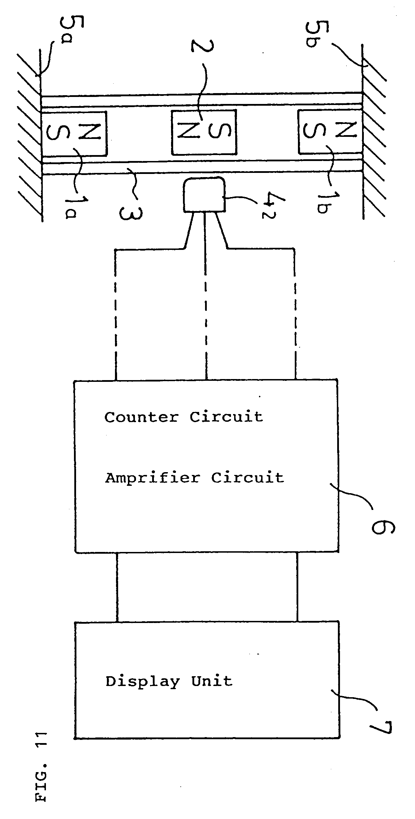

Fig. 11 illustrates an embodiment in which a vibration/impact detecting sensor of the invention is used in combination with a measuring apparatus.

Similarly to the previous embodiment, the vibration/impact detecting sensor comprises a pair of fixed magnets 1a, 1b whose S poles are positioned in spaced opposed relation, the fixed magnets being securely fixed to a pair of spaced parallel mounting bases 5a, 5b, a plastic-made moving magnet guide member 3 of a predetermined thickness securely fixed at both ends to the mounting bases in such a way as to surround the fixed magnets 1a, 1b, a moving magnet 2 housed in the moving magnet guide member in such a way that their N and S poles are positioned in opposed relation to corresponding inner poles of the fixed magnet 2 so that the moving magnet is held in a magnetically balanced position under a repulsion force of same polarity poles, and a Hall element 4₂ disposed outside the moving magnet guide member 3 at a position opposite to a side of the moving magnet 2. The sensor member of the above arrangement is fixedly mounted to a measurement object. Output of the sensor member is input to a measurement circuitry 6 including a counter circuit and an amplifier circuit via flexible lead wires (indicated by dotted lines) from the body of the sensor. Voltage differences due to changes in voltage between three lead wires which result from vibrations and/or impacts are successively detected, which are in turn counted and amplified. Thus, number of times, magnitude, time series of vibration/impact occurrence are displayed on a display unit 7.

In this case, the sensor may be mounted irrespective of direction so that the direction in which vibration or impact is likely to occur may be made to coincide to permit efficient measurement.

Vibration/impact detecting sensors of the present invention may be advantageously employed by adjusting the magnetic power of respective magnets for use therein. By so doing is it possible to adjust the correlationship between repulsion force of magnets and displacement of moving magnet due to vibration and/or impact. Various modifications are of course possible without departure from the scope of the invention.

The arrangement of the invention requires no Such parts as hinge mechanisms and involves no part liable to wear. The arrangement is simple in structure, stable in quality, durable and less expensive. The sensors can be widely used as sensors for various devices, such as vibrometer, seismograph, impact tester, and pedometer, for vibration/impact detection and measurement purposes.

Although the present invention has been fully described by way of example with reference to the accompanying drawings, it is to be noted here that various changes and modifications will be apparent to those skilled in the art. Therefore, unless otherwise such changes and modifications depart from the scope of the present invention.

## Claims

1. A vibration/impact detecting sensor for detecting a vibration and an impact and for providing a signal to a vibration/impact measuring device, comprising:
a fixed magnet (1) having magnetic poles oriented along a vertical axis;
a movable magnet (2) disposed above the fixed magnet (1) and movable along the vertical axis relative to the fixed magnet in response to a vibration and an impact;
a guide member (3) arranged in a fixed relation with respect to the fixed magnet (1) for guiding the movable magnet (2) along the vertical axis; and
movable magnet displacement sensing means provided adjacent to the guide member (3) for detecting displacements of the movable magnet (2), wherein
a lower end of the movable magnet (2) has a same polarity with an upper end of the fixed magnet (1) so that the movable magnet is floated above the fixed magnet along the vertical axis with a predetermined distance due to a repulsion force of homopolarity.

2. A vibration/impact detecting sensor as set forth in claim 1, wherein the movable magnet displacement sensing means is a reed switch (4₁) provided at a side of the guide member (3) and at a position opposite to the movable magnet (2).

3. A vibration/impact detecting sensor as set forth in claim 1, wherein the movable magnet displacement sensing means is a galvanomagnetic device (4₂) provided at a side of the guide member (3) and at a position opposite to the movable magnet (2).

4. A vibration/impact detecting sensor as set forth in claim 1, wherein the movable magnet displacement sensing means is a cored coil (4₃) provided at a side of the guide member (3) and at a position opposite to the movable magnet (2).

5. A vibration/impact detecting sensor as set forth in claim 1, wherein the movable magnet displacement sensing means is a cored coil (4₃) provided along the vertical axis and above an upper end of the movable magnet (2) with a predetermined distance from the fixed magnet (1).

6. A vibration/impact detecting sensor as set forth in claim 1, wherein the movable magnet displacement sensing means comprises a light emitter element (4₄) provided at a side of the guide member (3) and a light receptor element (4₅) provided at a side of the guide member (3) and at a position opposite to the light emitter element so that a light path defined by the light emitter and receptor elements perpendicularly crosses a moving path of the movable magnet (2) near one end thereof.

7. A vibration/impact detecting sensor as set forth in claim 1, wherein the movable magnet displacement sensing means comprises a light emitter element (4₄) and a light receptor element (4₅) provided above an upper surface of the movable magnet (2) with a predetermined distance from the fixed magnet (1) so that a light emitted from the emitter element is reflected on the upper surface of the movable magnet and is received by the receptor element.

8. A vibration/impact detecting sensor as set forth in claim 1, wherein the movable magnet displacement sensing means is a coil (4₆) wound around the guide member (3) over a region of moving movable magnet.

9. A vibration/impact detecting sensor as set forth in claim 1, wherein the movable magnet displacement sensing means comprises a movable contact (4₇) attached to an upper end of the movable magnet (2) and a fixed contact (4₈) provided above the upper end of the movable magnet with a predetermined distance from the fixed magnet (1).

10. A vibration/impact detecting sensor for detecting a vibration and an impact and for providing a signal to a vibration/impact measuring device, comprising:
a pair of fixed magnets (1a, 1b) disposed at a predetermined distance from each other so that their magnetic poles are positioned along an axis;
at least one movable magnet (2) disposed between opposed magnetic poles of the fixed magents (1a, 1b) and movable along the axis relative to the fixed magnets in response to a vibration and an impact;
a guide member (3) arranged in a fixed relation with respect to the fixed magnets (1a, 1b) for guiding said at least one movable magnet (2) between the fixed magnets (1a, 1b) along the axis; and
at least one movable magnet displacement sensing means provided adjacent to the guide member (3) for detecting displacements of said at least one movable magnet (2), wherein
each end of the at least one movable magnet opposes an end of an another magnet having a same polarity so that said at least one movable magnet is positioned at a magnetically balanced position due to a repulsion force of homopolarity.

11. A vibration/impact detecting sensor as set forth in claim 10, wherein each of the at least one movable magnet displacement sensing means is a reed switch (4₁) provided at a side of the guide member (3) and at a position opposite to corresponding one of the at least one movable magnet (2).

12. A vibration/impact detecting sensor as set forth in claim 10, wherein each of the at least one movable magnet displacement sensing means is a galvanomagnetic device (4₂) provided at a side of the guide member (3) and at a position opposite to corresponding one of the at least one movable magnet (2).

13. A vibration/impact detecting sensor as set forth in claim 10, wherein each of the at least one movable magnet displacement sensing means is a cored coil (4₃) provided at a side of the guide member (3) and at a position opposite to corresponding one of the at least one movable magnet (2).

14. A vibration/impact detecting sensor as set forth in claim 10, wherein each of the at least one movable magnet displacement sensing means comprises a light emitter element (4₄) provided at a side of the guide member (3) and a light receptor element (4₅) provided at a side of the guide member (3) and at a position opposite to the light emitter element so that a light path defined by the light emitter and receptor elements perpendicularly crosses a moving path of corresponding one of the at least one movable magnet (2) near one end thereof.

15. A vibration/impact detecting sensor as set forth in claim 10, wherein each of the at least one movable magnet displacement sensing means is a coil (4₆) wound around the guide member (3) over a region of moving movable magnet of corresponding one of the at least one movable magnet (2).
